# EUROPEAN PATENT APPLICATION

(11) **EP 1 884 725 A2**
(43) Date of publication of application: **06.02.2008**
(21) Application number: 07014621.2
(22) Date of filing: 25.07.2007
(51) Int. Cl.: F25B 1/10

(54) **Two-stage expansion refrigerating device**

(30) Priority: 31.07.2006 JP 2006207815
(71) Applicant: Sanyo Electric Co., Ltd., Moriguchi-shi, Osaka-fu (JP)
(72) Inventor: Sakimichi, Satoshi, Ora-gun Gunma (JP); Tsuihiji, Ryosuki, Ota-shi Gunma (JP); Imai, Satoshi, Ota-shi Gunma (JP); Itsuki, Hiroyuki, Ora-gun Gunma (JP)
(74) Representative: Glawe, Delfs, Moll

(57) **Abstract**

An object is to provide a two-stage expansion refrigerating device capable of performing control with low cost so that a pressure of a refrigerant which has flowed through a high-pressure-side expansion unit (3) is an optimum pressure, the device comprises a control unit (50) (a controller) which controls a compressor (1) (a low-stage-side compression element and a high-stage-side compression element) and each expansion unit (3,5) (a high-pressure-side expansion valve (3) as a high-pressure-side expansion unit and a low-pressure-side expansion valve (5) as a low-pressure-side expansion unit), and a temperature sensor (52) (a temperature detection unit) which detects a temperature of the refrigerant which has flowed through the high-pressure-side expansion valve (3), and the controller (50) estimates a pressure of the refrigerant which has flowed through the high-pressure-side expansion valve based on a temperature detected by the temperature sensor (52), and controls one of the high-pressure-side expansion valve (3) and the low-pressure-side expansion valve (5) based on the estimated pressure.

## Description

### BACKGROUND OF THE INVENTION

The present invention relates to a two-stage expansion refrigerating device in which expansion means includes high-pressure-side expansion means and low-pressure-side expansion means and in which a pressure of a refrigerant having the pressure reduced by the high-pressure-side expansion means is further reduced by the low-pressure-side expansion means.

Heretofore, in this type of two-stage expansion refrigerating device, a compressor including a low-stage-side compression element and a high-stage-side compression element, a gas cooler (or condenser), high-pressure-side expansion means, gas-liquid separation means, low-pressure-side expansion means and an evaporator constitute a refrigerant circuit. Moreover, a gas refrigerant discharged from the high-stage-side compression element of the compressor flows into the gas cooler to radiate heat. After the pressure of the refrigerant condensed by the gas cooler is reduced to an intermediate pressure by the high-pressure-side expansion means, the refrigerant flows into the gas-liquid separation means. The intermediate-pressure refrigerant in the gas-liquid separation means is separated into a gas-phase refrigerant (a saturated gas refrigerant) and a liquid-phase refrigerant (a saturated liquid refrigerant). Moreover, the intermediate-pressure gas-phase refrigerant separated by the gas-liquid separation means is combined with the refrigerant gas discharged from the low-stage-side compression element of the compressor, flows into the high-stage-side compression element, and compressed.

On the other hand, the intermediate-pressure liquid-phase refrigerant in the gas-liquid separation means has the pressure reduced by the low-pressure-side expansion means before reaching the evaporator. Moreover, after the refrigerant absorbs heat in the evaporator to evaporate, the refrigerant flows into the low-stage-side compression element of the compressor. This cycle is repeated. As described above, the refrigerant (the gas-phase refrigerant) having the pressure thereof reduced by the high-pressure-side expansion means to evaporate does not evaporate in the evaporator. Therefore, since the refrigerant does not contribute to refrigeration, the refrigerant is separated into the liquid-phase refrigerant and the gas-phase refrigerant by the gas-liquid separation means, and returned to a suction side of the high-stage-side compression element of the compressor. In consequence, the pressure of the only liquid-phase refrigerant is reduced by the low-pressure-side expansion means, the refrigerant is evaporated by the evaporator, and a refrigeration effect at the evaporator can be improved. Furthermore, the gas-phase refrigerant which does not contribute to the refrigeration is returned to the suction side of the high-stage-side compression element of the compressor. In consequence, since the gas-phase refrigerant passes by the low-stage-side compression element of the compressor, an amount of the refrigerant to be compressed by the low-stage-side compression element of the compressor, and the input can be reduced. Therefore, as compared with a conventional single-stage expansion refrigerating device, a coefficient of performance can be improved (e.g., see Japanese Patent Application Laid-Open No. 11-142007).

In addition, in such a two-stage expansion refrigerating device, in a case where the pressure of the refrigerant which has flowed through the high-pressure-side expansion means is higher than the pressure of the intermediate-pressure section on a suction side of high-stage-side compression means, the gas-phase refrigerant separated by the gas-liquid separation means can smoothly flow through the intermediate-pressure section by use of a pressure difference. However, the pressure difference between the pressure of the refrigerant which has flowed through the high-pressure-side expansion means (a region on a downstream side of the high-pressure-side expansion means and on an upstream side of the low-pressure-side expansion means) and the pressure of the intermediate-pressure section on the suction side of the high-stage-side compression means is excessively small. Alternatively, when the pressure of the intermediate-pressure section on the suction side of the high-stage-side compression means is higher, the gas-phase refrigerant separated by the gas-liquid separator does not easily flow through the intermediate-pressure section. In consequence, the gas-phase refrigerant separated by the gas-liquid separation means flows into the low-pressure-side expansion means together with the liquid-phase refrigerant, and reaches the evaporator. Therefore, since the refrigerant evaporates early at the evaporator, the gas-phase refrigerant which does not produce any refrigeration effect flows. The refrigeration effect deteriorates, and characteristics of the two-stage expansion refrigerating device cannot be utilized. To solve the problem, the pressure of the refrigerant which has flowed through the high-pressure-side expansion means needs to be detected to control this pressure into an optimum pressure. However, when a pressure sensor to detect such a pressure is attached, a disadvantage that costs of the refrigerating device remarkably increase has been caused.

### SUMMARY OF THE INVENTION

The present invention has been developed to solve such a problem of the conventional technology, and an object is to provide a two-stage expansion refrigerating device capable of controlling a pressure of a refrigerant which has flowed through high-pressure-side expansion means into an optimum pressure with low cost.

A two-stage expansion refrigerating device of a first invention is provided with a refrigerant circuit including a compressor, a gas cooler, high-pressure-side expansion means, gas-liquid separation means, low-pressure-side expansion means and an evaporator, returns a gas-phase refrigerant separated by the gas-liquid separation means to an intermediate-pressure section of the compressor, and allows a liquid-phase refrigerant to flow into the evaporator via the low-pressure-side expansion means, the device comprising: control means for controlling the compressor and each expansion means; and temperature detection means for detecting a temperature of the refrigerant which has flowed through the high-pressure-side expansion mean, the device being characterized in that the control means estimates a pressure P2 of the refrigerant which has flowed through the high-pressure-side expansion means based on a temperature detected by the temperature detection means, and controls one of the high-pressure-side expansion means and the low-pressure-side expansion means based on the estimated pressure P2.

The two-stage expansion refrigerating device of a second invention is characterized in that, in the above first invention, the temperature detection means detects the temperature of the liquid-phase refrigerant separated by the gas-liquid separation means.

The two-stage expansion refrigerating device of a third invention is characterized in that, in the above inventions, the control means controls one of the high-pressure-side expansion means and the low-pressure-side expansion means based on the pressure P2 and a pressure P1 of the intermediate-pressure section of the compressor.

The two-stage expansion refrigerating device of a fourth invention is characterized in that, in the above inventions, the control means controls one of the high-pressure-side expansion means and the low-pressure-side expansion means so that the pressure P2 is lager than the pressure P1.

According to the first invention, the device is provided with the refrigerant circuit including the compressor, the gas cooler, the high-pressure-side expansion means, the gas-liquid separation means, the low-pressure-side expansion means and the evaporator, returns the gas-phase refrigerant separated by the gas-liquid separation means to the intermediate-pressure section of the compressor, and allows the liquid-phase refrigerant to flow into the evaporator via the low-pressure-side expansion means. The device comprises the control means for controlling the compressor and each expansion means, and the temperature detection means for detecting the temperature of the refrigerant which has flowed through the high-pressure-side expansion means. The control means estimates the pressure P2 of the refrigerant which has flowed through the high-pressure-side expansion means based on the temperature detected by the temperature detection means, and controls the high-pressure-side expansion means based on the estimated pressure P2. Therefore, without using any pressure sensor, the pressure P2 of the refrigerant which has flowed through a high-pressure-side expansion valve is estimated in accordance with the temperature detected by the temperature detection means, and the high-pressure-side expansion means or the low-pressure-side expansion means can correctly be controlled. In consequence, costs can be reduced.

Especially, as in the second invention, the temperature detection means detects the temperature of the liquid-phase refrigerant separated by the gas-liquid separation means. Therefore, the refrigerant temperature can more correctly be detected. In consequence, the high-pressure-side expansion means or the low-pressure-side expansion means can more correctly be controlled.

Furthermore, as in the third invention, the control means controls one of the high-pressure-side expansion means and the low-pressure-side expansion means based on the pressure P2 and the pressure P1 of the intermediate-pressure section of the compressor. Therefore, for example, in a case where the control means controls one of the high-pressure-side expansion means and the low-pressure-side expansion means so that the pressure P2 of the refrigerant which has flowed through the high-pressure-side expansion means is larger than the pressure P1 of the intermediate-pressure section of the compressor as in the fourth invention, the gas-phase refrigerant separated by the gas-liquid separation means smoothly flows into the intermediate-pressure section of the compressor. In consequence, correct gas-liquid separation can be performed.

In general, according to the present invention, the refrigerant which has flowed through the high-pressure-side expansion means is controlled into an optimum pressure, and a refrigeration effect can be obtained by utilizing characteristics of the two-stage expansion refrigerating device at the maximum.

### BRIEF DESCRIPTION OF THE DRAWINGS

FIG. 1 is a refrigerant circuit diagram of a two-stage expansion refrigerating device according to one embodiment of the present invention;
FIG. 2 is a functional block diagram of the two-stage expansion refrigerating device of FIG. 1;
FIG. 3 is a p-h graph (a Mollier diagram) of the two-stage expansion refrigerating device of FIG. 1;
FIG. 4 is a flow chart showing control of a high-pressure-side expansion valve of the two-stage expansion refrigerating device of Embodiment 1;
FIG. 5 is a flow chart showing control of a low-pressure-side expansion valve of the two-stage expansion refrigerating device of FIG. 1;
FIG. 6 is a flow chart showing control of a high-pressure-side expansion valve of another two-stage expansion refrigerating;
FIG. 7 is a flow chart showing control of a low-pressure-side expansion valve of a two-stage expansion refrigerating device of Embodiment 2; and
FIG. 8 is a flow chart showing control of a high-pressure-side expansion valve of a two-stage expansion refrigerating device of Embodiment 3.

### DETAILED DESCRIPTION OF THE PREFERRED EMBODIMENT

Embodiments of a two-stage expansion refrigerating device of the present invention will hereinafter be described in detail with reference to the drawings.

### (Embodiment 1)

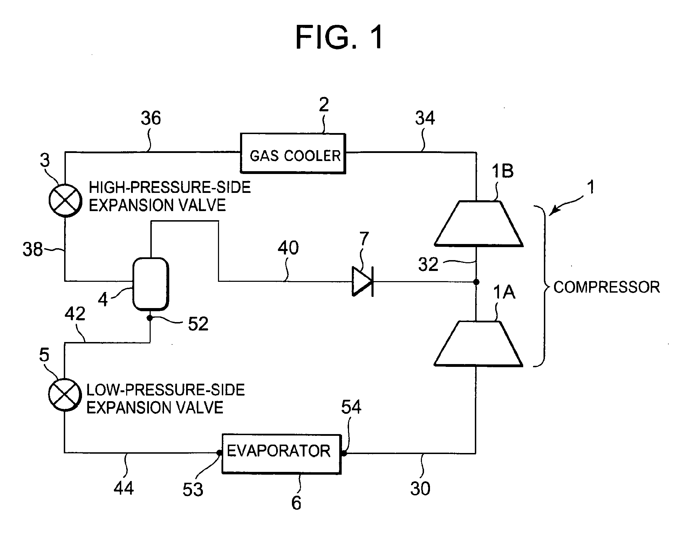

FIG. 1 shows a refrigerant circuit diagram of a two-stage expansion refrigerating device according to one embodiment of the present invention. In the two-stage expansion refrigerating device, a compressor 1, a gas cooler 2, a high-pressure-side expansion valve (high-pressure-side expansion means) 3, a gas-liquid separator 4, a low-pressure-side expansion valve (low-pressure-side expansion means) 5 and an evaporator 6 constitute a refrigerant circuit. The compressor 1 includes a low-stage-side compression element 1A and a high-stage-side compression element 1B, and both of the compression elements 1A, 1B are integrally combined with a single motor (not shown). Moreover, the low-stage-side compression element 1A compresses a low-pressure refrigerant to obtain an intermediate pressure. After discharging this refrigerant to a intermediate-pressure section between the low-stage-side compression element 1A and the high-stage-side compression element 1B, the refrigerant is compressed at a high pressure by the high-stage-side compression element 1B.

The low-stage-side compression element 1A on a suction side is connected to one end of a refrigerant suction tube 30, and a low-temperature low-pressure refrigerant gas is introduced into the low-stage-side compression element 1A from this end. The other end of the refrigerant suction tube 30 is connected to an outlet of the evaporator 6. The low-stage-side compression element 1A on a discharge side is connected to one end of a refrigerant suction tube 32, this refrigerant suction tube 32 is connected to the high-stage-side compression element 1B on the suction side, and an intermediate-pressure refrigerant gas is introduced into the high-stage-side compression element 1B from this end. A middle portion of the refrigerant suction tube 32 is connected to one end of a refrigerant pipe 40.

The high-stage-side compression element 1B on the discharge side is connected to one end of a refrigerant discharge tube 34, and a high-temperature high-pressure refrigerant gas compressed by the high-stage-side compression element 1B is discharged from the compressor 1 via the refrigerant discharge tube 34. The other end of the refrigerant discharge tube 34 is connected to an inlet of the gas cooler 2. That is, the compressor 1 sucks the refrigerant flowed out from the evaporator 6 via the low-stage-side compression element 1A to compress the refrigerant. The refrigerant is discharged from the low-stage-side compression element 1A via the refrigerant suction tube 32, and combined with the refrigerant flowed out from the gas-liquid separator 4 described later. Subsequently, the refrigerant is allowed to flow into the high-stage-side compression element 1B, and the intermediate-pressure refrigerant is compressed by the high-stage-side compression element 1B, and discharged to the gas cooler 2.

The gas cooler 2 is a heat exchanger which performs heat exchange between the high-temperature high-pressure refrigerant gas discharged from the high-stage-side compression element 1B and a heat medium such as a water or air to radiate heat of the refrigerant. An outlet of the gas cooler 2 is connected to a refrigerant pipe 36, and this refrigerant pipe 36 is connected to an inlet of the high-pressure-side expansion valve 3. The high-pressure-side expansion valve 3 is throttle means for reducing the pressure of the refrigerant flowed out from the gas cooler 2. Moreover, a refrigerant pipe 38 connected to an outlet of the high-pressure-side expansion valve 3 is connected to the gas-liquid separator 4.

The gas-liquid separator 4 is separation means for separating the refrigerant brought into a gas/liquid two-phase region by reducing the pressure of the refrigerant by the high-pressure-side expansion valve 3 into a gas-phase refrigerant (a saturated gas refrigerant) and a liquid-phase refrigerant (a saturated liquid refrigerant). This separator includes a vertically long cylindrical main body. Moreover, an inlet which communicates with the inside of the main body is formed at one side surface of the main body of the gas-liquid separator, and this inlet is connected to the refrigerant pipe 38. Moreover, a refrigerant outlet is formed at an upper surface of the main body. The refrigerant outlet is a take-out port via which the gas-phase refrigerant separated from the liquid-phase refrigerant by the gas-liquid separator 4 is taken from an inner space of the separator via an upper portion. The refrigerant outlet is connected to the refrigerant pipe 40, and the other end of this refrigerant pipe 40 opens above the gas-liquid separator 4. One end of this refrigerant pipe 40 is connected to a middle portion of the refrigerant suction tube 32. A check valve 7 is connected to the refrigerant pipe 40, and one end of the valve connected to a middle portion of the refrigerant suction tube 32 is regarded as a forward direction. When the refrigerant is compressed by the low-stage-side compression element 1A, the refrigerant has an intermediate pressure, and is discharged to the refrigerant suction tube 32. The check valve 7 is disposed so as to avoid a counter flow of such a refrigerant into the refrigerant pipe 40 connected to the middle portion of the refrigerant suction tube 32.

On the other hand, a lower surface (a bottom surface) of the main body of the gas-liquid separator 4 is provided with another refrigerant outlet. This refrigerant outlet is a takeout port via which the liquid-phase refrigerant separated from the gas-phase refrigerant by the gas-liquid separator 4 is taken, and is connected to one end of a refrigerant pipe 42. One end of the refrigerant pipe 42 opens at a lower portion of the gas-liquid separator 4, and the other end of the pipe is connected to an inlet of the low-pressure-side expansion valve 5. This low-pressure-side expansion valve 5 is a throttle means for reducing the pressure of the liquid-phase refrigerant separated by the gas-liquid separator 4, and an outlet of the low-pressure-side expansion valve 5 is connected to an inlet of the evaporator 6 via a refrigerant pipe 44.

Moreover, the refrigerant pipe 42 connected to the takeout port of the gas-liquid separator 4 via which the liquid-phase refrigerant is taken is provided with a temperature sensor 52 via the high-pressure-side expansion valve 3. The sensor detects a temperature of the liquid-phase refrigerant separated by the gas-liquid separator 4. The refrigerant pipe 44 connected to the inlet of the evaporator 6 is provided with an evaporator inlet temperature sensor 53 which detects a refrigerant temperature Tin at the inlet of the evaporator 6. The refrigerant pipe 30 connected to an outlet of the evaporator 6 is provided with an evaporator outlet temperature sensor 54 which detects a temperature (a refrigerant temperature at the outlet of the evaporator 6) Tout of the refrigerant evaporated at the evaporator 6 and flows into the low-stage-side compression element 1A. These temperature sensors 52, 53 and 54 are connected as control means described later to a controller 50.

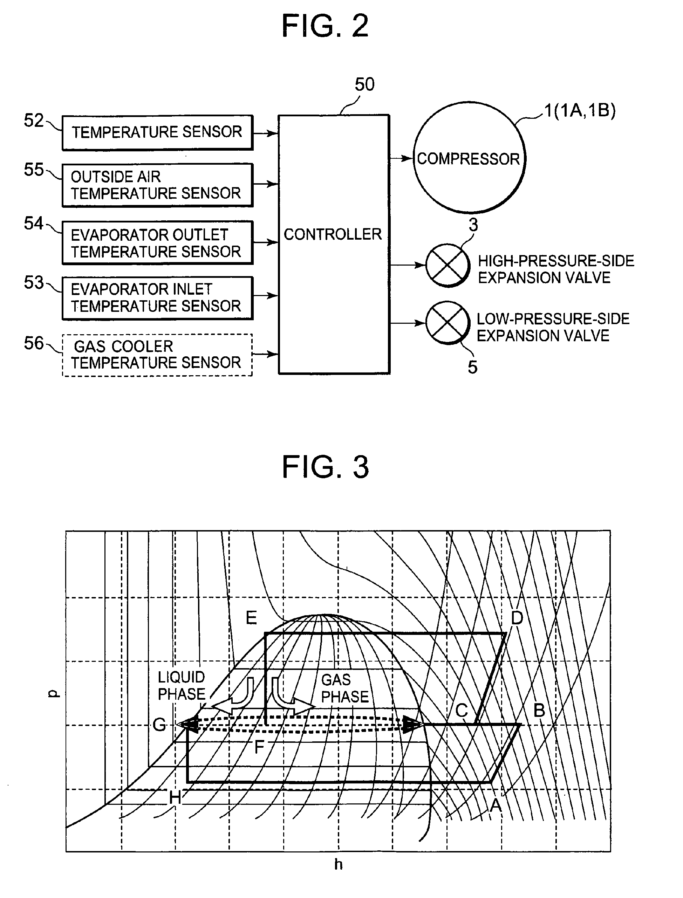

In addition, the compressor 1, the high-pressure-side expansion valve 3 and the low-pressure-side expansion valve 5 of the two-stage expansion refrigerating device of the present embodiment are connected to the controller 50, and the controller 50 controls operations and valve open degrees of the compressor and the valves. This controller 50 is control means for controlling the two-stage expansion refrigerating device. As shown in FIG. 2, the controller on an input side is connected to the refrigerant temperature sensor 52, the evaporator inlet temperature sensor 53, the evaporator outlet temperature sensor 54 and an outside air temperature sensor 55. The outside air temperature sensor 55 is a temperature sensor which detects a temperature of the outside (outside air) of the two-stage expansion refrigerating device.

On the other hand, the controller 50 on an output side is connected to the compressor 1, the high-pressure-side expansion valve 3 and the low-pressure-side expansion valve 5. Moreover, the controller 50 controls an operation frequency (Hz) of the compressor 1 based on the outside air temperature detected by the outside air temperature sensor 55 and a temperature of a space (i.e., a space to be refrigerated) to be frozen by the evaporator 6. Specifically, the compressor 1 is controlled to turn ON/OFF in accordance with the temperature of the space to be refrigerated. Moreover, the operation frequency of the compressor 1 is controlled in accordance with the outside air temperature. For example, when the two-stage expansion refrigerating device of the present embodiment is used in a refrigerator, the frequency of the compressor 1 is controlled at three-stage frequency bands in accordance with the outside air temperature. That is, when the outside air temperature is low, the controller 50 controls the frequency of the compressor 1 into the lowest frequency. When the outside air temperature is high, the controller controls the frequency of the compressor 1 into the highest frequency. At a usual outside air temperature, the controller controls the compressor 1 so as to obtain a frequency between the above-mentioned operation frequencies. It is to be noted that, in the present embodiment, the controller 50 controls the operation frequency of the compressor 1 based on an output of the outside air temperature sensor 55, but the present invention is not limited to the outside air temperature sensor 55. For example, as shown by a broken line of FIG. 2, a temperature sensor 56 is installed at the gas cooler 2, and the controller 50 may control the operation frequency of the compressor 1 by the gas cooler temperature sensor 56.

Furthermore, the controller 50 controls the high-pressure-side expansion valve 3 based on the pressure of the refrigerant which has flowed through the high-pressure-side expansion valve 3. In the present embodiment, the controller 50 estimates the pressure of the refrigerant which has flowed through this high-pressure-side expansion valve 3 based on the refrigerant temperature detected by the refrigerant temperature sensor 52 installed at the refrigerant pipe 38. The controller controls the high-pressure-side expansion valve 3 based on this estimated pressure P2.

That is, the controller 50 detects the temperature of the liquid-phase refrigerant flowed out from the gas-liquid separator 4 with the temperature sensor 52, and estimates the pressure P2 of the refrigerant passed trough the high-pressure-side expansion valve 3 based on this temperature. That is, the refrigerant which has flowed through the high-pressure-side expansion valve 3 has a gas/liquid two-phase region mixed with the liquid-phase refrigerant, and the refrigerant including the liquid phase has a correlation between the temperature and the pressure. Therefore, in a case where the temperature of the refrigerant which has flowed through the high-pressure-side expansion valve 3 is detected, the pressure can be estimated from the temperature of the refrigerant.

Specific control will be described later in detail in the following operation description. The controller 50 controls the high-pressure-side expansion valve 3 so that the pressure P2 of the refrigerant which has flowed through the high-pressure-side expansion valve 3 is a target pressure Ptg set beforehand. It is to be noted that the target pressure Ptg has a positive value set beforehand.

Furthermore, the controller 50 controls the valve open degree of the low-pressure-side expansion valve 5 based on a difference between the outlet temperature Tout of the evaporator 6 detected by the evaporator outlet temperature sensor 54 and the inlet temperature Tin of the evaporator 6 detected by the evaporator inlet temperature sensor 53, so that the refrigerant flowed out from the evaporator 6 and flows into the compressor 1 indicates a predetermined superheat degree. In a case where the valve open degree of the low-pressure-side expansion valve 5 is controlled in this manner so that the refrigerant evaporated by the evaporator 6 and flows into the low-stage-side compression element 1A of the compressor 1 has the predetermined superheat degree, the refrigerant flows into the low-stage-side compression element 1A can be brought into a gas-phase state. In consequence, without disposing any liquid refrigerant storage means such as a receiver tank on the suction side of the compressor 1, it is possible to avoid in advance a disadvantage that the liquid refrigerant flows into the compressor 1 to compress the liquid.

It is to be noted that, in the present embodiment, a fluorine-based refrigerant such as 134a or 410A is used as the refrigerant.

Next, an operation of the device constituted as described above will be described with reference to a p-h graph (a Mollier diagram) of FIG. 3. When the compressor 1 is started by the controller 50, the low-temperature low-pressure refrigerant gas flowed out from the evaporator 6 is sucked from the refrigerant suction tube 30 to the low-stage-side compression element 1A on the suction side (state A of FIG. 3). The refrigerant flows into the low-stage-side compression element 1A is compressed at the element to form the intermediate-pressure refrigerant gas, and the gas is discharged from the low-stage-side compression element 1A on the discharge side to pass through the refrigerant suction tube 32 (state B of FIG. 3). The intermediate-pressure refrigerant gas which has flowed through the refrigerant suction tube 32 is combined with the gas-phase refrigerant from the refrigerant pipe 40 connected to the middle portion of the refrigerant suction tube 32 (state C of FIG. 3). Subsequently, the refrigerant flows into the high-stage-side compression element 1B and compressed at the element to form the high-temperature high-pressure refrigerant gas, and the gas is discharged from the high-stage-side compression element 1B (state D of FIG. 3).

The high-temperature high-pressure refrigerant gas discharged from the high-stage-side compression element 1B flows into the gas cooler 2 through the refrigerant discharge tube 34, and radiates heat by an air-cooling or water-cooling system in the gas cooler 2 (state E of FIG. 3). The refrigerant which has radiated the heat in the gas cooler 2 flows through the refrigerant pipe 36 to reach the high-pressure-side expansion valve 3. Moreover, the pressure of the refrigerant is reduced by the high-pressure-side expansion valve 3. In consequence, a part of the refrigerant evaporates, and is brought into the two-phase region in which the gas and the liquid are mixed (state F of FIG. 3). Moreover, the remaining refrigerant (the liquid-phase refrigerant) is cooled by such evaporation (state G of FIG. 3).

Moreover, the refrigerant which has flowed through the high-pressure-side expansion valve 3 and which has the two-phase region flows into the gas-liquid separator 4 via the refrigerant pipe 38, and is separated into the gas-phase refrigerant and the liquid-phase refrigerant by the gas-liquid separator 4. Moreover, the gas-phase refrigerant separated by this gas-liquid separator 4 flows through the refrigerant pipe 40 connected to one outlet of the gas-liquid separator 4, and is combined with the intermediate-pressure refrigerant which flows through the refrigerant suction tube 32 (the state C of FIG. 3 described above). Here, in the refrigerant brought into the gas/liquid two-phase region by reducing the pressure of the refrigerant by the high-pressure-side expansion valve 3, the gas-phase refrigerant does not have any evaporation latent heat. That is, the refrigerant has already evaporated at the high-pressure-side expansion valve 3. Therefore, even when the refrigerant flows into the evaporator 6, the refrigerant does not evaporate. Therefore, the refrigerant does not contribute to the refrigeration. To solve the problem, the gas-phase refrigerant is separated from the liquid-phase refrigerant by the gas-liquid separator 4. The only gas-phase refrigerant is returned from the refrigerant pipe 40 to an intermediate-pressure section on the discharge side of the low-stage-side compression element 1A. In consequence, a refrigeration effect of the evaporator 6 can be improved. Furthermore, the gas-phase refrigerant which does not contribute to the refrigeration is returned to the suction side of the high-stage-side compression element 1B of the compressor 1. In consequence, the gas-phase refrigerant passes by the low-stage-side compression element 1A of the compressor 1.

In consequence, an amount of the refrigerant to be compressed by the low-stage-side compression element 1A decreases, and an input is reduced. Therefore, as compared with a conventional single-stage expansion refrigerating device, a coefficient of performance can be improved.

On the other hand, the liquid-phase refrigerant (the state G of FIG. 3) separated by the gas-liquid separator 4 flows through the refrigerant pipe 42 connected to the other outlet of the gas-liquid separator 4 to reach the low-pressure-side expansion valve 5. At the valve, the pressure of the refrigerant is further reduced (state H of FIG. 3). Moreover, since the pressure of the refrigerant is reduced by the low-pressure-side expansion valve 5, the refrigerant is brought into the gas/liquid two-phase region again. However, in the refrigerant brought into the gas/liquid two-phase region by the high-pressure-side expansion valve 3 as described above, the gas-phase refrigerant is separated by the gas-liquid separator 4, and the pressure of the only liquid-phase refrigerant is reduced at the low-pressure-side expansion valve 5. In consequence, an amount of the gas-phase refrigerant which flows into the evaporator 6 can be reduced.

The refrigerant having the pressure reduced by the low-pressure-side expansion valve 5 and brought into the gas/liquid two-phase region flows into the evaporator 6 in this state, heat exchange between the refrigerant and surrounding air is performed, and the refrigerant evaporates. At this time, the surrounding air is cooled by a heat absorption effect. The refrigerant which has evaporated at the evaporator 6 (the state A of FIG. 3) is sucked from the refrigerant suction tube 30 into the low-stage-side compression element 1A of the compressor 1 to repeat a cycle.

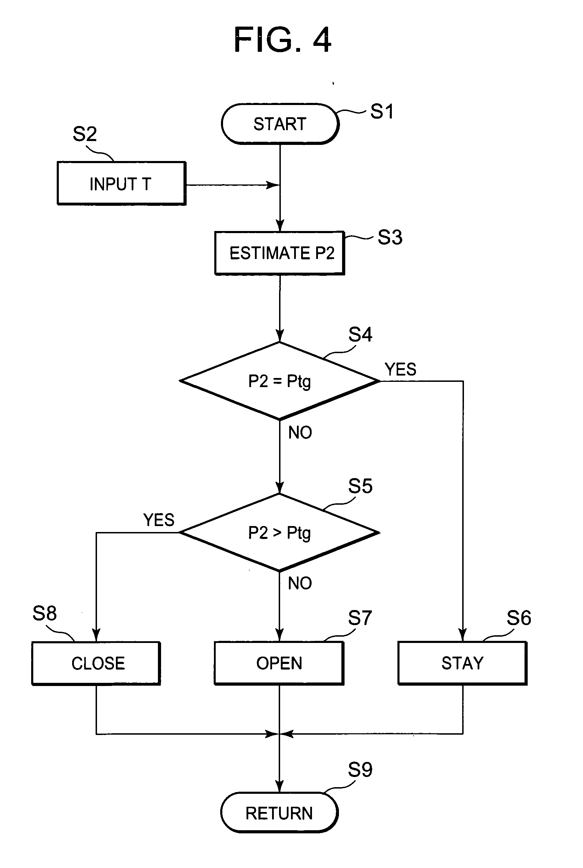

In addition, as described above, the controller 50 estimates the pressure of the refrigerant which has flowed through the high-pressure-side expansion valve 3 from the refrigerant temperature detected by the temperature sensor 52 at the high-pressure-side expansion valve 3, and controls the high-pressure-side expansion valve 3 based on this estimated refrigerant pressure P2. Here, the control of the high-pressure-side expansion valve 3 of the two-stage expansion refrigerating device according to the present embodiment will be described with reference to a flow chart of FIG. 4.

First, when the controller 50 is started in step S1 of FIG. 4 (Start), the controller 50 detects a temperature T of the liquid-phase refrigerant flowed out from the gas-liquid separator 4 with the temperature sensor 52 (step S2 of FIG. 4), and estimates the pressure P2 of the refrigerant which has flowed through the high-pressure-side expansion valve 3 from the temperature T (step S3 of FIG. 4).

Subsequently, the controller 50 shifts to step S4 of FIG. 4, and judges whether or not the refrigerant pressure P2 estimated in the step S3 is the target pressure Ptg. In this case, when the refrigerant pressure P2 estimated in the step S3 is equal to the target pressure Ptg, the controller 50 shifts to step S6, allows the high-pressure-side expansion valve 3 to stay at the current valve open degree as it is (Stay), advances to step S9, and returns to the step S1 (Return), thereby repeating the control (Return).

On the other hand, in a case where it is judged in the step S4 that the refrigerant pressure P2 estimated in the step S3 has a value different from that of the target pressure Ptg, the controller 50 shifts to step S5 to judge whether or not the estimated refrigerant pressure P2 is larger than the target pressure Ptg. Moreover, when the refrigerant pressure P2 is larger than the target pressure Ptg, the controller shifts to step S8 of FIG. 4. When the refrigerant pressure P2 is larger than the target pressure Ptg in this manner, the valve open degree of the high-pressure-side expansion valve 3 is decreased as much as one step. The controller advances to the step S9 to return to the step S1 (Return).

As described above, in a case where it is judged in the step S5 that the refrigerant pressure P2 is larger than the target pressure Ptg, the controller 50 closes the high-pressure-side expansion valve 3 as much as one step (Close). Therefore, an effect of reducing the pressure of the refrigerant improves at the high-pressure-side expansion valve 3, and the pressure P2 of the refrigerant which has flowed through the high-pressure-side expansion valve 3 drops.

On the other hand, in a case where it is judged in the step S5 that the estimated refrigerant pressure P2 is smaller than the target pressure Ptg, the controller 50 shifts to step S7. When the estimated refrigerant pressure P2 is smaller than the target pressure Ptg in this manner, the pressure P2 of the refrigerant which has flowed through the high-pressure-side expansion valve 3 is excessively small. The gas-phase refrigerant separated by the gas-liquid separator 4 might not easily flow into the intermediate-pressure section of the compressor 1 or might not flow. In consequence, the gas-phase refrigerant reaches the low-pressure-side expansion valve 5 together with the liquid-phase refrigerant, flows through the evaporator 6, and flows into the low-stage-side compression element 1A. In consequence, since the refrigerant evaporates early at the evaporator 6, a large amount of the gas-phase refrigerant which does not produce any refrigeration effect flows. A disadvantage that the refrigeration effect is remarkably deteriorated occurs. Furthermore, any input at the low-stage-side compression element 1A is not reduced. In consequence, the coefficient of performance remarkably drops, and characteristics of the two-stage expansion refrigerating device cannot be utilized sufficiently.

To solve the problem, in a case where it is judged in the step S5 of FIG. 4 that the estimated refrigerant pressure P2 is smaller than the target pressure Ptg, the controller 50 shifts to the step S7, increases the valve open degree of the high-pressure-side expansion valve 3 as much as one step, and advances to the step S9 to return to the step S1 (Return).

As described above, in a case where it is judged in the step S5 that the estimated refrigerant pressure P2 is smaller than the target pressure Ptg, the controller 50 increases the valve open degree of the high-pressure-side expansion valve 3 as much as one step (Open). Therefore, the effect of reducing the pressure of the refrigerant is reduced at the high-pressure-side expansion valve 3, and the pressure P2 of the refrigerant which has flowed through the high-pressure-side expansion valve 3 increases. In consequence, the pressure P2 of the refrigerant which has flowed through the high-pressure-side expansion valve 3 increases. Owing to such a refrigerant pressure P2, the gas-phase refrigerant separated by the gas-liquid separator 4 can smoothly be returned to the discharge side of the low-stage-side compression element 1A of the compressor 1 (the suction side of the high-stage-side compression element 1B) via the refrigerant pipe 40.

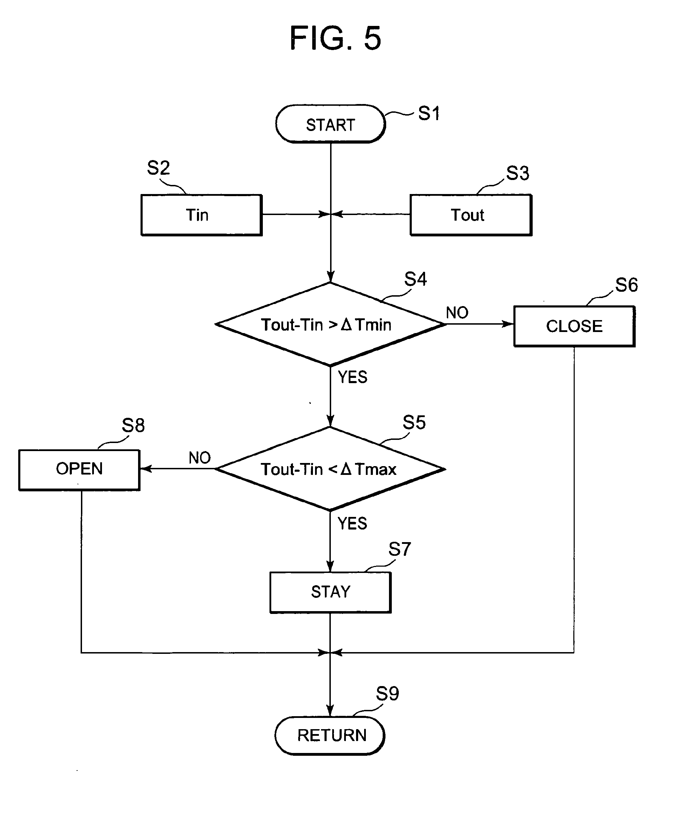

Furthermore, as described above, the controller 50 controls the low-pressure-side expansion valve 5 in accordance with the refrigerant temperature Tin at the inlet of the evaporator 6 detected by the evaporator inlet temperature sensor 53 and the refrigerant temperature Tout at the outlet of the evaporator 6 detected by the evaporator outlet temperature sensor 54. Next, the control of the low-pressure-side expansion valve 5 of the two-stage expansion refrigerating device according to the present embodiment will be described with reference to a flow chart of FIG. 5.

First, when the controller 50 is started in step S1 of FIG. 5 (Start), the controller 50 detects the refrigerant temperature Tin at the inlet of the evaporator 6 with the evaporator inlet temperature sensor 53 in step S2. Subsequently, after detecting the refrigerant temperature Tout at the outlet of the evaporator 6 with the evaporator outlet temperature sensor 54 in step S3 of FIG. 5, the controller shifts to step S4 of FIG. 5.

Moreover, in the step S4 of FIG. 5, the controller 50 compares, with a predetermined lower limit value ΔTmin (a positive value set beforehand), a difference (Tout-Tin) between the refrigerant temperature Tout at the outlet of the evaporator 6 detected in the step S3 of FIG. 5 and the refrigerant temperature Tin at the inlet of the evaporator 6 detected in the step S2 of FIG. 5. When a value of Tout-Tin is larger than the predetermined lower limit value ΔTmin, the controller shifts to step S5 of FIG. 5.

On the other hand, when the value of Tout-Tin is the lower limit value ΔTmin or less, the controller shifts to step S6 of FIG. 5. When the value of Tout-Tin is the predetermined lower limit value ΔTmin or less in this manner, a temperature difference between the temperatures Tout and Tin is excessively small, and the superheat degree of the refrigerant flowed out from the evaporator 6 is not sufficiently secured. That is, the refrigerant having the liquid-phase state might remain in the refrigerant flowed out from the evaporator 6. In consequence, the liquid-phase refrigerant flows into the low-stage-side compression element 1A of the compressor 1, and the liquid might be compressed.

To solve the problem, in a case where it is judged in the step S4 of FIG. 5 that the value of Tout-Tin is the predetermined lower limit value ΔTmin or less, the controller 50 shifts to the step S6 to reduce the valve open degree of the low-pressure-side expansion valve 5 (Close). The controller then advances to step S9 to return to the step S1 (Return), thereby repeating the control.

As described above, in a case where it is judged in the step S4 that the value of Tout-Tin is the predetermined lower limit value ΔTmin or less, the controller 50 reduces the valve open degree of the low-pressure-side expansion valve 5. Therefore, the amount of the refrigerant which flows through the evaporator 6 decreases, and the refrigerant can sufficiently be evaporated in the evaporator 6. In consequence, such liquid compression can be released.

On the other hand, when the value of Tout-Tin is higher than the predetermined lower limit value ΔTmin, the controller 50 shifts to the step S5 to compare the value of Tout-Tin with a predetermined upper limit value ΔTmax (a positive value set beforehand) set beforehand. Moreover, when the value of Tout-Tin is smaller than the predetermined upper limit value ΔTmax, the controller shifts to step S7, and allows the low-pressure-side expansion valve 5 to stay at the current valve open degree as it is (Stay). The controller then advances to the step S9 to return to the step S1 (Return), thereby repeating the control.

On the other hand, when the value of Tout-Tin is the predetermined upper limit value ΔTmax or more, the controller shifts to step S8. When the value of Tout-Tin is the predetermined upper limit value ΔTmax or more, the refrigerant temperature Tout at the outlet of the evaporator 6, that is, the temperature of the refrigerant flows into the low-stage-side compression element 1A of the compressor 1 is excessively high. A disadvantage that the temperature and the pressure of the refrigerant flowing through the circuit abnormally increase might be caused.

To solve the problem, when the value of Tout-Tin is the predetermined upper limit value ΔTmax or more, the controller 50 shifts to the step S8 of FIG. 5 to loosen throttle of the low-pressure-side expansion valve 5 (open the low-pressure-side expansion valve 5 from the current valve open degree (Open)). In consequence, the amount of the refrigerant flowing through the evaporator 6 increases, the temperature of the refrigerant at the outlet of the evaporator 6 drops, and such abnormal increases of the temperature and the pressure of the refrigerant flowing through the circuit can be eliminated.

In addition, as described above, when the controller 50 closes the low-pressure-side expansion valve 5 in the step S6 of FIG. 5 (Close), the amount of the refrigerant flowing from the low-pressure-side expansion valve 5 to the evaporator 6 decreases, and the refrigerant is dammed by the low-pressure-side expansion valve 5. Therefore, the refrigerant pressure on an upstream side and the refrigerant temperature having a correlation with respect to the refrigerant pressure increase. That is, the temperature of the refrigerant which has flowed through the high-pressure-side expansion valve 3, detected by the temperature sensor 52, rises, and the refrigerant pressure P2 estimated from the refrigerant temperature also rises. Even in such a case, as described in the control of the high-pressure-side expansion valve 3 with reference to FIG. 4, in a case where the pressure P2 of the refrigerant which has flowed through the high-pressure-side expansion valve 3 is higher than the target pressure Ptg set beforehand, as shown in the step S8 of FIG. 4, since the controller 50 reduces the valve open degree of the high-pressure-side expansion valve 3 as much as one step (Close), the refrigerant flows without any problem.

As described above in detail, according to the two-stage expansion refrigerating device of the present embodiment, the controller 50 estimates the pressure P2 of the refrigerant which has flowed through the high-pressure-side expansion valve 3 based on the refrigerant temperature detected by the temperature sensor 52, and controls the high-pressure-side expansion valve 3 based on the estimated pressure P2. In consequence, without using any expensive pressure sensor, the pressure P2 of the refrigerant which has flowed through the high-pressure-side expansion valve 3 is estimated using the inexpensive temperature sensor 52, and the high-pressure-side expansion valve 3 can correctly be controlled. Therefore, costs can be reduced.

Furthermore, in the present embodiment, the temperature sensor 52 is installed at the refrigerant pipe 42 connected to the refrigerant outlet formed at the main body lower portion of the gas-liquid separator 4. The refrigerant temperature sensor 52 detects the temperature of the liquid-phase refrigerant separated by the gas-liquid separator 4. Therefore, it is possible to more correctly detect the refrigerant temperature with the temperature **sensor 52.**

That is, as described above, the refrigerant which has flowed through the high-pressure-side expansion valve 3 has the gas/liquid two-phase region in which the refrigerant having the liquid-phase state is mixed. The refrigerant including such a liquid phase has a correlation between the temperature and the pressure. Therefore, in a case where the temperature of the refrigerant which has flowed through the high-pressure-side expansion valve 3 is detected, the pressure can be estimated.

In this case, the temperature sensor is installed at the refrigerant pipe 38 connected to the outlet of the high-pressure-side expansion valve 3, the refrigerant pipe 40 connected to the gas-liquid separator 4 or the refrigerant pipe 42 to detect the temperature of the refrigerant. In consequence, the pressure can be estimated. However, especially the temperature of the liquid-phase refrigerant passed through the refrigerant pipe 42 and separated by the gas-liquid separator 4 as in the present embodiment does not easily rise or does not rise, even if the heat enters the device from the outside as described above. Therefore, the temperature sensor 52 is installed at the refrigerant pipe 42 to detect the temperature of the liquid-phase refrigerant separated by the gas-liquid separator 4. In consequence, the refrigerant temperature can more correctly be detected by the temperature sensor 52. Therefore, the high-pressure-side expansion valve 3 can more correctly be controlled.

It is to be noted that, in the present embodiment, the controller 50 controls the high-pressure-side expansion valve 3 so that the pressure P2 of the refrigerant which has flowed through the high-pressure-side expansion valve 3 is the target pressure Ptg set beforehand. However, the target pressure Ptg may be determined by the controller 50 in accordance with the outside air temperature detected by the outside air temperature sensor 55 or the frequency of the compressor 1. The controller may control the high-pressure-side expansion valve 3 so that the pressure P2 of the refrigerant which has flowed through the high-pressure-side expansion valve 3 is set in a range of an upper limit pressure (Ptg+p) to a lower limit pressure (Ptg-p). The range has a predetermined pressure width ±p above and below the target pressure Ptg.

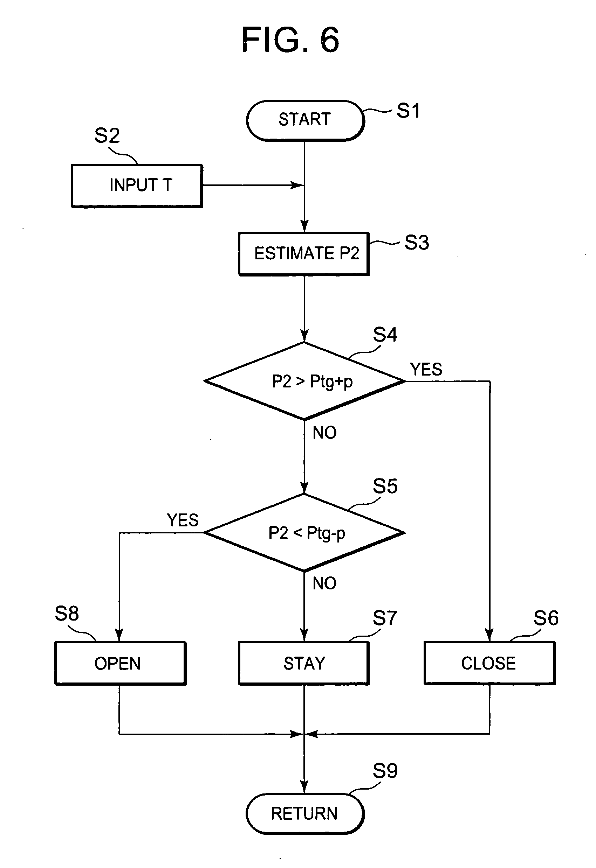

The control in this case will be described with reference to a flow chart of FIG. 6. When the controller 50 is started in step S1 of FIG. 6 (Start), the controller 50 detects the temperature T of the liquid-phase refrigerant flowed out from the gas-liquid separator 4 with the temperature sensor 52 (step S2 of FIG. 6), and estimates the pressure P2 of the refrigerant which has flowed through the high-pressure-side expansion valve 3 from the temperature T (step S3 of FIG. 6).

Subsequently, the controller 50 shifts to step S4 of FIG. 6, and judges whether or not the refrigerant pressure P2 estimated in the step S3 is higher than the upper limit (Ptg+p) of the target pressure Ptg. In this case, when the refrigerant pressure P2 estimated in the step S3 is higher than the upper limit pressure (Ptg+p), the controller shifts to step S6, closes the high-pressure-side expansion valve 3 as much as one step, advances to step S9, and returns to the step S1 (Return).

On the other hand, in a case where it is judged in the step S4 that the estimated refrigerant pressure P2 is the upper limit value (Ptg+p) of the target pressure Ptg or less, the controller 50 shifts to step S5 to judge whether or not the estimated refrigerant pressure P2 is lower than the lower limit pressure (Ptg-p). Moreover, when the estimated refrigerant pressure P2 is smaller than the lower limit pressure (Ptg-p), the flow shifts to step S8 of FIG. 6. When the estimated refrigerant pressure P2 is smaller than the lower limit pressure (Ptg-p) in this manner, the pressure P2 of the refrigerant which has flowed through the high-pressure-side expansion valve 3 is excessively small. Therefore, the gas-phase refrigerant separated by the gas-liquid separator 4 might not easily flow through the intermediate-pressure section of the compressor 1 or might not flow. In consequence, the gas-phase refrigerant reaches the low-pressure-side expansion valve 5 together with the liquid-phase refrigerant, flows through the evaporator 6, and flows into the low-stage-side compression element 1A. In consequence, since the refrigerant evaporates early at the evaporator 6, a large amount of the gas-phase refrigerant which does not produce any refrigeration effect flows. A disadvantage that the refrigeration effect is remarkably deteriorated occurs. Furthermore, any input at the low-stage-side compression element 1A is not reduced. In consequence, the coefficient of performance remarkably drops, and the characteristics of the two-stage expansion refrigerating device cannot be utilized sufficiently.

To solve the problem, in a case where it is judged in the step S5 of FIG. 6 that the estimated refrigerant pressure P2 is smaller than the lower limit pressure (Ptg-p), the controller 50 shifts to the step S8, increases the valve open degree of the high-pressure-side expansion valve 3 as much as one step, and advances to the step S9 to return to the step S1 (Return).

As described above, in a case where it is judged in the step S5 that the estimated refrigerant pressure P2 is smaller than the lower limit pressure (Ptg-p), the controller 50 increases the valve open degree of the high-pressure-side expansion valve 3 (Open) as much as one step. Therefore, the effect of reducing the pressure of the refrigerant is reduced at the high-pressure-side expansion valve 3, and the pressure P2 of the refrigerant which has flowed through the high-pressure-sideexpansion valve 3 increases. In consequence, the pressure P2 of the refrigerant which has flowed through the high-pressure-side expansion valve 3 increases. Owing to such a refrigerant pressure P2, the gas-phase refrigerant separated by the gas-liquid separator 4 can smoothly be returned to the discharge side of the low-stage-side compression element 1A of the compressor 1 (the suction side of the high-stage-side compression element 1B) via the refrigerant pipe 40.

On the other hand, in a case where it is judged in the step S5 of FIG. 6 that the estimated refrigerant pressure P2 is the lower limit pressure (Ptg-p) or more, the controller 50 shifts to step S6, allows the high-pressure-side expansion valve 3 to stay at the current valve open degree as it is (Stay), and advances to the step S9 to return to the step S1 (Return), thereby repeating the control.

### (Embodiment 2)

It is to be noted that, in Embodiment 1 described above, a controller 50 estimates a pressure P2 of a refrigerant which has flowed through a high-pressure-side expansion valve 3 from a temperature of the refrigerant which has flowed through the high-pressure-side expansion valve 3 detected with a temperature sensor 52, and controls the high-pressure-side expansion valve 3 based on the estimated pressure P2, so that the pressure of the refrigerant which has flowed through the high-pressure-side expansion valve 3 is optimized. However, the present invention is not limited to this embodiment, and the present invention is effective as long as at least control means (the controller 50 in the embodiment) estimates the pressure P2 of the refrigerant which has flowed through high-pressure-side expansion means (the high-pressure-side expansion valve 3) based on the temperature detected by temperature detection means (the temperature sensor 52 in the embodiment), and controls one of the high-pressure-side expansion means (the high-pressure-side expansion valve 3) and low-pressure-side expansion means (a low-pressure-side expansion valve 5) based on the estimated pressure P2.

Here, one example of a case where the controller 50 controls the low-pressure-side expansion valve 5 based on the estimated pressure P2 will be described. It is to be noted that, in the present embodiment, a refrigerant circuit similar to that of Embodiment 1 shown in FIG. 1 is used. Therefore, description thereof is omitted, and only control will be described.

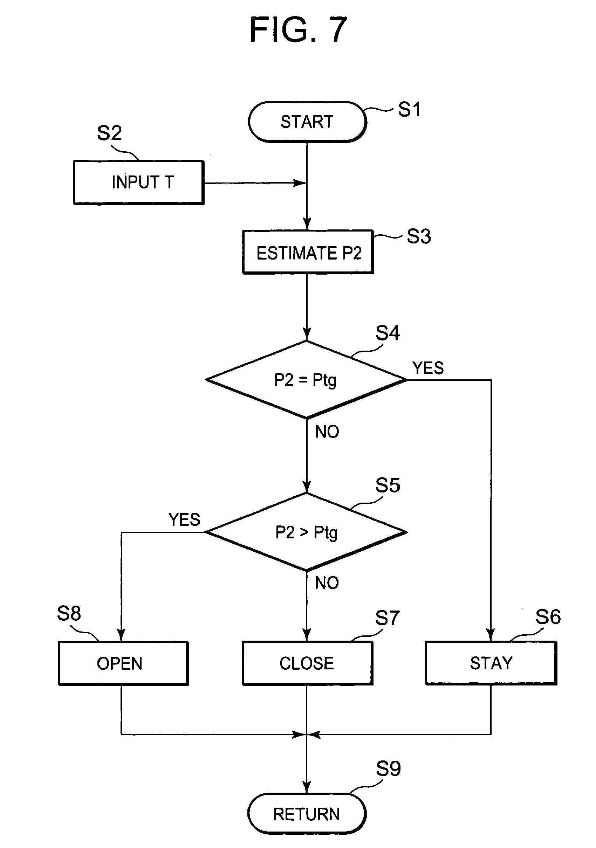

The controller 50 controls the low-pressure-side expansion valve 5 so that the pressure P2 of the refrigerant which has flowed through the high-pressure-side expansion valve 3 is a target pressure Ptg set beforehand. It is to be noted that the target pressure Ptg is a positive value set beforehand. The control of the low-pressure-side expansion valve 5 of a two-stage expansion refrigerating device according to the present embodiment will be described with reference to a flow chart of FIG. 7.

First, when the controller 50 is started in step S1 of FIG. 7 (Start), the controller 50 detects a temperature T of a liquid-phase refrigerant flowed out from a gas-liquid separator 4 with the temperature sensor 52 (step S2 of FIG. 7), and estimates the pressure P2 of the refrigerant which has flowed through the high-pressure-side expansion valve 3 from the temperature T (step S3 of FIG. 7).

Subsequently, the controller 50 shifts to step S4 of FIG. 7 to judge whether or not the refrigerant pressure P2 estimated in the step S3 is the target pressure Ptg. In this case, when the refrigerant pressure P2 estimated in the step S3 is equal to the target pressure Ptg, the controller 50 shifts to step S6, allows the low-pressure-side expansion valve 5 to stay at the current valve open degree as it is (Stay), advances to step S9, and returns to the step S1 (Return), thereby repeating the control.

On the other hand, in a case where it is judged in the step S4 that the refrigerant pressure P2 estimated in the step S3 has a value different from that of the target pressure Ptg, the controller 50 shifts to step S5 to judge whether or not the estimated refrigerant pressure P2 is larger than the target pressure Ptg. Moreover, when the refrigerant pressure P2 is larger than the target pressure Ptg, the controller shifts to step S8 of FIG. 7. When the refrigerant pressure P2 is larger than the target pressure Ptg in this manner, the valve open degree of the low-pressure-side expansion valve 5 is increased as much as one step. The controller advances to the step S9 to return to the step S1 (Return).

As described above, in a case where it is judged in the step S5 that the refrigerant pressure P2 is larger than the target pressure Ptg, the controller 50 increases the low-pressure-side expansion valve 5 (Open) as much as one step. Therefore, the refrigerant easily flows through the low-pressure-side expansion valve 5, and the pressure P2 of the refrigerant which has flowed through the high-pressure-side expansion valve 3 drops.

On the other hand, in a case where it is judged in the step S5 that the estimated refrigerant pressure P2 is smaller than the target pressure Ptg, the controller 50 shifts to step S7. When the estimated refrigerant pressure P2 is smaller than the target pressure Ptg in this manner, the pressure P2 of the refrigerant which has flowed through the high-pressure-side expansion valve 3 is excessively low. The gas-phase refrigerant separated by the gas-liquid separator 4 might not easily flow into an intermediate-pressure section of a compressor 1 or might not flow. In consequence, the gas-phase refrigerant reaches the low-pressure-side expansion valve 5 together with the liquid-phase refrigerant, flows through an evaporator 6, and flows into a low-stage-side compression element 1A. In consequence, since the refrigerant evaporates early at the evaporator 6, a large amount of the gas-phase refrigerant which does not produce any refrigeration effect flows. A disadvantage that the refrigeration effect is remarkably deteriorated occurs. Furthermore, any input at the low-stage-side compression element 1A is not reduced. In consequence, the coefficient of performance remarkably drops, and characteristics of the two-stage expansion refrigerating device cannot be utilized sufficiently.

To solve the problem, in a case where it is judged in the step S5 of FIG. 7 that the estimated refrigerant pressure P2 is smaller than the target pressure Ptg, the controller 50 shifts to the step S7, reduces the valve open degree of the low-pressure-side expansion valve 5 as much as one step, and advances to the step S9 to return to the step S1 (Return).

As described above, in a case where it is judged in the step S5 that the estimated refrigerant pressure P2 is smaller than the target pressure Ptg, the controller 50 reduces the valve open degree of the low-pressure-side expansion valve 5 (Close) as much as one step. Therefore, the effect of reducing the pressure of the refrigerant is reduced at the low-pressure-side expansion valve 5. That is, the effect of reducing the pressure of the low-pressure-side expansion valve 5 increases, and the refrigerant does not easily flow. Therefore, the pressure P2 of the refrigerant which has flowed through the high-pressure-side expansion valve 3 increases. In consequence, the pressure P2 of the refrigerant which has flowed through the high-pressure-side expansion valve 3 increases. Owing to such a refrigerant pressure P2, the gas-phase refrigerant separated by the gas-liquid separator 4 can smoothly be returned to the discharge side of the low-stage-side compression element 1A of the compressor 1 (a suction side of a high-stage-side compression element 1B) via a refrigerant pipe 40.

As described above in detail, as in the present embodiment, the controller 50 estimates the pressure P2 of the refrigerant which has flowed through the high-pressure-side expansion valve 3 based on the refrigerant temperature detected by the temperature sensor 52, and controls the low-pressure-side expansion valve 5 based on the estimated pressure P2. In consequence, without using any expensive pressure sensor, the pressure P2 of the refrigerant which has flowed through the high-pressure-side expansion valve 3 is estimated using the inexpensive temperature sensor 52, and the low-pressure-side expansion valve 5 can correctly be controlled. Therefore, an effect similar to that of the above embodiment can be obtained.

### (Embodiment 3)

Moreover, in the above embodiments, a pressure P2 of a refrigerant which has flowed through a high-pressure-side expansion valve 3 is estimated based on an only temperature detected by a temperature sensor 52, and an high-pressure-side expansion valve 3 or a low-pressure-side expansion valve 5 is controlled based on the estimated pressure P2. However, the high-pressure-side expansion valve 3 or the low-pressure-side expansion valve 5 may be controlled based on a pressure P1 of an intermediate-pressure section of a compressor 1 in addition to the pressure of the refrigerant which has flowed through the high-pressure-side expansion valve 3. One example of this case will hereinafter be described in detail. It is to be noted that, in the present embodiment, a refrigerant circuit similar to that of Embodiment 1 shown in FIG. 1 is used..

In the present embodiment, the controller 50 controls the high-pressure-side expansion valve 3 based on the pressure P2 of the refrigerant which has flowed through the high-pressure-side expansion valve 3 and the pressure P1 of the intermediate-pressure section of the compressor. Specifically, the controller 50 controls the high-pressure-side expansion valve 3 so that the pressure P2 of the refrigerant which has flowed through the high-pressure-side expansion valve 3 is lager than the pressure P1 of the intermediate-pressure section of the compressor 1. Here, the intermediate-pressure section of the compressor 1 is in a range from a time when the refrigerant compressed by a low-stage-side compression element 1A of the compressor 1 has an intermediate pressure until the refrigerant flows into a high-stage-side compression element 1B and compressed. The pressure P1 of the intermediate-pressure section of the compressor 1 is a pressure of the refrigerant compressed by the low-stage-side compression element 1A. This pressure P1 of the intermediate-pressure section of the compressor 1 is shown in a table based on an outside air temperature sensor 55 and an operation frequency. That is, the controller 50 contains information of the table based on the outside air temperature sensor 55 and the operation frequency, and the pressure P1 of the intermediate-pressure section of the compressor 1 is calculated from the operation frequency at that time in accordance with an outside air temperature input by the outside air temperature sensor 55.

Moreover, in the present embodiment, a controller 50 detects a temperature of a liquid-phase refrigerant flowed out from a gas-liquid separator 4 with the temperature sensor 52, and estimates the pressure P2 of the refrigerant which has flowed through the high-pressure-side expansion valve 3 based on this temperature. That is, the refrigerant which has flowed through the high-pressure-side expansion valve 3 has a gas/liquid two-phase region in which a liquid-phase refrigerant is mixed, and the refrigerant including such a liquid phase has a correlation between a temperature and a pressure. Therefore, the temperature or the refrigerant which has flowed through the high-pressure-side expansion valve 3 can be detected to estimate the pressure from the temperature of the refrigerant.

Furthermore, the controller 50 controls the high-pressure-side expansion valve 3 so that the pressure P2 of the refrigerant which has flowed through the high-pressure-side expansion valve 3 estimated as described above is higher than the pressure P1 of the intermediate-pressure section of the compressor 1. Specifically, as described later in detail in description of an operation, the controller 50 controls a valve open degree of the high-pressure-side expansion valve 3 in a stepwise manner so that a difference (P2-P1) between the pressure P2 of the refrigerant which has flowed through the high-pressure-side expansion valve 3 and the pressure P1 of the intermediate-pressure section of the compressor 1 is between an upper limit value ΔPmax and a lower limit value ΔPmin. In the present embodiment, when the value of P2-P1 is a predetermined lower limit value ΔPmin or less, the controller 50 increases the valve open degree of the high-pressure-side expansion valve 3 as much as one step. When the value is a predetermined upper limit value ΔPmax or more, the controller controls the high-pressure-side expansion valve 3 so as to reduce the valve open degree as much as one step. It is to be noted that the lower limit value ΔPmin and the upper limit value ΔPmax are both positive values set beforehand.

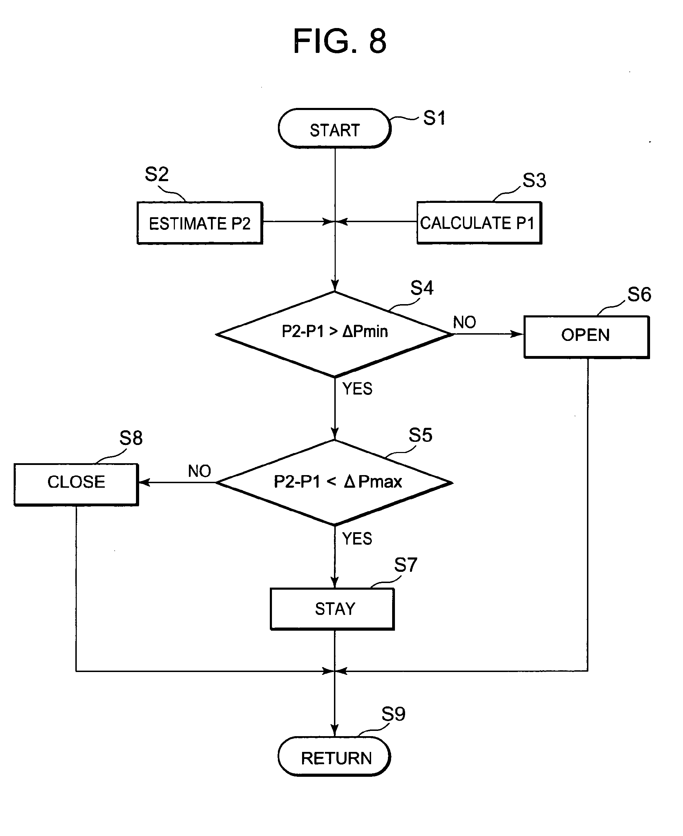

In addition, as described above, the controller 50 controls the high-pressure-side expansion valve 3 so that the pressure P2 of the refrigerant which has flowed through the high-pressure-side expansion valve 3, estimated from the refrigerant temperature detected by the temperature sensor 52, is higher than the pressure P1 of the intermediate-pressure section of the compressor 1 estimated from an outside air temperature detected by the outside air temperature sensor 55. Here, control of the high-pressure-side expansion valve 3 of the two-stage expansion refrigerating device according to the present embodiment will be described with reference to a flow chart of FIG. 8.

First, when the controller 50 is started in step S1 of FIG. 8 (Start), the controller 50 detects a temperature of the liquid-phase refrigerant flowed out from the gas-liquid separator 4 with the temperature sensor 52 to estimate the pressure P2 of the refrigerant which has flowed through the high-pressure-side expansion valve 3 from the temperature (step S2 of FIG. 8). The controller 50 calculates the pressure P1 of the intermediate-pressure section of the compressor 1 from the table stored in the controller 50 based on the outside air temperature detected by the outside air temperature sensor 55 and an operation frequency of the compressor 1 (step S3 of FIG. 8).

Subsequently, the controller 50 shifts to step S4 of FIG. 8 to compare the difference (P2-P1) between the pressure P2 estimated in the step S2 and the pressure P1 calculated in the step S3 with a predetermined lower limit value ΔPmin set beforehand. Moreover, when the value of the P2-P1 is larger than the lower limit value ΔPmin, the controller shifts to step S5.

On the other hand, when the value of P2-P1 is smaller than the predetermined lower limit value ΔPmin or less, the controller shifts to step S6 of FIG. 8. When the value of P2-P1 is the predetermined lower limit value ΔPmin or less, a pressure difference between P2 and P1 is excessively small, and the gas-phase refrigerant separated by the gas-liquid separator 4 might not easily flow into the intermediate-pressure section of the compressor 1 or might not flow. In consequence, the gas-phase refrigerant reaches the low-pressure-side expansion valve 5 together with the liquid-phase refrigerant, flows through an evaporator 6, and flows into the low-stage-side compression element 1A. In consequence, since the refrigerant evaporates early at the evaporator 6, a large amount of the gas-phase refrigerant which does not produce any refrigeration effect flows. A disadvantage that the refrigeration effect is remarkably deteriorated occurs. Furthermore, any input at the low-stage-side compression element 1A is not reduced. In consequence, a coefficient of performance remarkably drops, and characteristics of the two-stage expansion refrigerating device cannot be utilized sufficiently.

To solve the problem, when the value of P2-P1 is the predetermined lower limit value ΔPmin or less in the step S4 of FIG. 8, the controller 50 shifts to the step S6 to increases the valve open degree of the high-pressure-side expansion valve 3 as much as one step, and advances to step S9 to return to the step S1 (Return).

In a case where it is judged in the step S4 that the value of P2-P1 is the predetermined lower limit value ΔPmin or less in this manner, the controller 50 increases the valve open degree of the high-pressure-side expansion valve 3 as much as one step (Open). Therefore, an effect of reducing the pressure of the refrigerant is reduced at the high-pressure-side expansion valve 3, and the pressure P2 of the refrigerant which has flowed through the high-pressure-side expansion valve 3 increases. In consequence, a predetermined pressure difference can be secured between the pressure P2 of the refrigerant which has flowed through the high-pressure-side expansion valve 3 and the pressure P1 of the intermediate-pressure section. Therefore, owing to such a pressure difference, the gas-phase refrigerant separated by the gas-liquid separator 4 can smoothly be returned to the discharge side of the low-stage-side compression element 1A of the compressor 1 (the suction side of the high-stage-side compression element 1B) via a refrigerant pipe 40.

On the other hand, when the value of P2-P1 is higher than the predetermined lower limit value ΔPmin, the controller 50 shifts to the step S5 to compare the difference (P2-P1) between the pressures P1 and P2 with the predetermined upper limit value ΔPmax set beforehand. Moreover, when the value P2-P1 is smaller than the predetermined upper limit value ΔPmax, the controller shifts to step S7, allows the high-pressure-side expansion valve 3 to stay at the current valve open degree as it is (Stay), advances to the step S9, and returns to the step S1, thereby repeating the control.

On the other hand, when the value of P2-P1 is the predetermined upper limit value ΔPmax or more, the controller shifts to step S8. When the value of P2-P1 is the predetermined upper limit value ΔPmax or more in this manner, the controller reduces the valve open degree of the high-pressure-side expansion valve 3 as much as one step, advances to the step S9, and returns to the step S1 (Return).

When the value of P2-P1 is the predetermined upper limit value ΔPmax or more in the step S7, the controller 50 reduces the valve open degree of the high-pressure-side expansion valve 3 as much as one step (Close), the effect of reducing the pressure of the refrigerant increases at the high-pressure-side expansion valve 3, and the pressure P2 of the refrigerant which has flowed through the high-pressure-side expansion valve 3 drops.

Furthermore, as described above, the controller 50 controls the low-pressure-side expansion valve 5 in accordance with a refrigerant temperature Tin at an inlet of the evaporator 6 detected by an evaporator inlet temperature sensor 53 and a refrigerant temperature Tout at an outlet of the evaporator 6 detected by an evaporator outlet temperature sensor 54. Next, the control of the low-pressure-side expansion valve 5 of the two-stage expansion refrigerating device according to the present embodiment will be described with reference to a flow chart of FIG. 5.

First, when the controller 50 is started in step S1 of FIG. 5 (Start), the controller 50 detects the refrigerant temperature Tin at the inlet of the evaporator 6 with the evaporator inlet temperature sensor 53 in step S2 of FIG. 5. Subsequently, after detecting the refrigerant temperature Tout at the outlet of the evaporator 6 with the evaporator outlet temperature sensor 54 in step S3 of FIG. 5, the controller shifts to step S4 of FIG. 5.

Moreover, in the step S4 of FIG. 5, the controller 50 compares, with a predetermined lower limit value ΔTmin (a positive value set beforehand), a difference (Tout-Tin) between the refrigerant temperature Tout at the outlet of the evaporator 6 detected in the step S3 of FIG. 5 and the refrigerant temperature Tin at the inlet of the evaporator 6 detected in the step S2 of FIG. 5. When a value of Tout-Tin is larger than the predetermined lower limit value ΔTmin, the controller shifts to step S5 of FIG. 5.

On the other hand, when the value of Tout-Tin is the predetermined lower limit value ΔTmin or less, the controller shifts to step S6 of FIG. 5. When the value of Tout-Tin is the predetermined lower limit value ΔTmin or less in this manner, a temperature difference between the temperatures Tout and Tin is excessively small, and a superheat degree of the refrigerant flowed out from the evaporator 6 is not sufficiently secured. That is, the refrigerant having the liquid-phase state might remain in the refrigerant flowed out from the evaporator 6. In consequence, the liquid-phase refrigerant may flow into the low-stage-side compression element 1A of the compressor 1, and the liquid might be compressed.

To solve the problem, in a case where it is judged in the step S4 of FIG. 5 that the value of Tout-Tin is the predetermined lower limit value ΔTmin or less, the controller 50 shifts to the step S6 to reduce the valve open degree of the low-pressure-side expansion valve 5 (Close). The controller then advances to step S9 to return to the step S1, thereby repeating the control (Return).

As described above, in a case where it is judged in the step S4 that the value of Tout-Tin is the predetermined lower limit value ΔTmin or less, the controller 50 reduces the valve open degree of the low-pressure-side expansion valve 5. Therefore, the amount of the refrigerant which flows through the evaporator 6 decreases, and the refrigerant can sufficiently be evaporated in the evaporator 6. In consequence, such liquid compression can be released.

On the other hand, when the value of Tout-Tin is higher than the predetermined lower limit value ΔTmin, the controller 50 shifts to the step S5 to compare the value of Tout-Tin with a predetermined upper limit value ΔTmax (a positive value set beforehand) set beforehand. Moreover, when the value of Tout-Tin is smaller than the predetermined upper limit value ΔTmax, the controller shifts to step S7, and allows the low-pressure-side expansion valve 5 to stay at the current valve open degree as it is (Stay).. The controller then advances to the step S9 to return to the step S1, thereby repeating the control (Return).

On the other hand, when the value of Tout-Tin is the predetermined upper limit value ΔTmax or more, the controller shifts to step S8. When the value of Tout-Tin is the predetermined upper limit value ΔTmax or more, the refrigerant temperature Tout at the outlet of the evaporator 6, that is, the temperature of the refrigerant flows into the low-stage-side compression element 1A of the compressor 1 is excessively high. A disadvantage that the temperature and the pressure of the refrigerant flowing through the circuit abnormally increase might be caused.

To solve the problem, when the value of Tout-Tin is the predetermined upper limit value ΔTmax or more, the controller 50 shifts to the step S8 of FIG. 5 to loosen throttle of the low-pressure-side expansion valve 5 (open the low-pressure-side expansion valve 5 from the current valve open degree (Open)). In consequence, the amount of the refrigerant flowing through the evaporator 6 increases, the temperature of the refrigerant at the outlet of the evaporator 6 drops, and such abnormal increases of the temperature and the pressure of the refrigerant flowing through the circuit can be eliminated.

In addition, as described above, when the controller 50 closes the low-pressure-side expansion valve 5 in the step S6 of FIG. 5 (Close), the amount of the refrigerant flowing from the low-pressure-side expansion valve 5 to the evaporator 6 decreases, and the refrigerant is dammed by the low-pressure-side expansion valve 5. Therefore, the refrigerant pressure on an upstream side of the low-pressure-side expansion valve and the refrigerant temperature having a correlation with respect to the refrigerant pressure increase. That is, the temperature of the refrigerant which has flowed through the high-pressure-side expansion valve 3, detected by the temperature sensor 52, rises, and the refrigerant pressure P2 estimated from the refrigerant temperature also rises. Even in such a case, as described in the control of the high-pressure-side expansion valve 3 with reference to FIG. 8, in a case where the difference P2-P1 between the pressure P2 of the refrigerant which has flowed through the high-pressure-side expansion valve 3 and the pressure P1 of the intermediate-pressure section of the compressor 1 is the predetermined upper limit value ΔPmax set beforehand or more, as shown in the step S8 of FIG. 8, since the controller 50 reduces the valve open degree of the high-pressure-side expansion valve 3 as much as one step (Close), the refrigerant flows without any problem.

As described above in detail, according to the two-stage expansion refrigerating device of the present embodiment, the controller 50 estimates the pressure P2 of the refrigerant which has flowed through the high-pressure-side expansion valve 3 based on the refrigerant temperature detected by the temperature sensor 52, and controls the high-pressure-side expansion valve 3 based on the estimated pressure P2 and the pressure P1 of the intermediate-pressure section of the compressor 1. In consequence, the pressure P2 of the refrigerant which has flowed through the high-pressure-side expansion valve 3 can easily be controlled.

Especially, the pressure P2 of the refrigerant which has flowed through the high-pressure-side expansion valve 3 is estimated based on the refrigerant temperature detected by the temperature sensor 52. Therefore, in the same manner as in the above embodiments, without using any expensive pressure sensor, the pressure P2 of the refrigerant which has flowed through the high-pressure-side expansion valve 3 is estimated using the inexpensive temperature sensor 52, and the high-pressure-side expansion valve 3 can correctly be controlled. Therefore, costs can be reduced.

Furthermore, the temperature sensor 52 is installed at a refrigerant pipe 42 connected to a refrigerant outlet formed at a main body lower portion of the gas-liquid separator 4. The temperature sensor 52 detects the temperature of the liquid-phase refrigerant separated by the gas-liquid separator 4. Therefore, it is possible to more correctly detect the refrigerant temperature with the temperature sensor 52.

In addition, the controller 50 controls the high-pressure-side expansion valve 3 so that the pressure P2 of the refrigerant which has flowed through the high-pressure-side expansion valve 3 is higher than the pressure P1 of the intermediate-pressure section of the compressor. Therefore, the gas-phase refrigerant separated by the gas-liquid separator 4 smoothly flows into the intermediate-pressure section of the compressor 1. In consequence, the gas-phase refrigerant which does not contribute to the refrigeration of an object to be refrigerated in the evaporator 6 is separated from the liquid-phase refrigerant by the gas-liquid separator 4, and can smoothly be returned to the intermediate-pressure section of the compressor 1. Therefore, the amount of the refrigerant to be compressed by the low-stage-side compression element 1A can be reduced.

In consequence, a refrigeration effect of the evaporator 6 can be improved, and the input at the low-stage-side compression element 1A can be reduced. Therefore, according to the present invention, the refrigerant which has flowed through the low-pressure-side expansion valve 5 can be controlled into an optimum pressure, and a refrigeration effect can be obtained utilizing characteristics of the two-stage expansion refrigerating device at the maximum.

It is to be noted that, in the above embodiments, as the compressor, the compressor 1 including two compression means of the low-stage-side compression element 1A and the high-stage-side compression element 1B is used, but the compressor applicable to the two-stage expansion refrigerating device of the present invention is not limited to the compressor 1 of the present embodiment. That is, any compressor may be used as long as the gas-phase refrigerant separated by the gas-liquid separation means can be returned to the intermediate-pressure section of the compressor. For example, the compression elements 1A, 1B may include two compression means including motors, respectively, and include one compression element provided with an intermediate suction port.

## Claims

1. A two-stage expansion refrigerating device which is provided with a refrigerant circuit including a compressor, a gas cooler, high-pressure-side expansion means, gas-liquid separation means, low-pressure-side expansion means and an evaporator and which returns a gas-phase refrigerant separated by the gas-liquid separation means to an intermediate-pressure section of the compressor and which allows a liquid-phase refrigerant to flow into the evaporator via the low-pressure-side expansion means, the device comprising:
control means for controlling the compressor and each expansion means; and
temperature detection means for detecting a temperature of the refrigerant which has flowed through the high-pressure-side expansion means,
wherein the control means estimates a pressure P2 of the refrigerant which has flowed through the high-pressure-side expansion means based on a temperature detected by the temperature detection means, and controls one of the high-pressure-side expansion means and the low-pressure-side expansion means based on the estimated pressure P2.

2. The two-stage expansion refrigerating device according to claim 1, wherein the temperature detection means detects the temperature of the liquid-phase refrigerant separated by the gas-liquid separation means.

3. The two-stage expansion refrigerating device according to claim 1 or 2, wherein the control means controls one of the high-pressure-side expansion means and the low-pressure-side expansion means based on the pressure P2 and a pressure P1 of the intermediate-pressure section of the compressor.

4. The two-stage expansion refrigerating device according to claim 1, 2 or 3, wherein the control means controls one of the high-pressure-side expansion means and the low-pressure-side expansion means so that the pressure P2 is lager than the pressure P1.
